# EUROPEAN PATENT APPLICATION

(11) **EP 2 355 484 A1**
(43) Date of publication of application: **10.08.2011**
(21) Application number: 10006022.7
(22) Date of filing: 10.06.2010
(51) Int. Cl.: H04N 1/04

(54) **Scanning device capable of switching image processing mode automatically**

(30) Priority: 04.02.2010 CN 201010112829
(71) Applicant: Mustec Systems Inc., Hsin-Chu City, (TW)
(72) Inventor: Lin, Szu-Han, Keelung City (TW); Wen, Hui-Wen, Zhudong Township Hsinchu County (TW)
(74) Representative: Hager, Thomas Johannes

(57) **Abstract**

A scanning device (100, 500, 600) includes a first tray (111, 220, 300, 520, 620), a second tray (112, 400), a detection module (120), a scanning module (130), and an image processing module (140). The first tray (111, 220, 300, 520, 620) has an identification element (240, 330, 540, 560, 640). When the scanning device (100, 500, 600) scans the first tray (111, 220, 300, 520, 620), the detection module (120) detects the identification element (240, 330, 540, 560, 640) so as to generate a first signal. When the scanning device (100, 500, 600) scans the second tray (112, 400), the detection module (120) does not detect the identification element (240, 330, 540, 560, 640) so as to generate a second signal. The image processing module (140) uses a first group of parameters to process the scanned image when receiving the first signal. The image processing module (140) uses a second group of parameters to process the scanned image when receiving the second signal.

## Description

The present invention relates to a scanning device according to the pre-characterizing clause of claim 1.

A scanning device not only converts a photo to a digital image, but also converts a negative (film) and positive (slide) to a digital image. Since the shapes of the negative and positive are different, the user needs to use the negative tray for loading the negative and the positive tray for loading the positive. Then the negative tray or positive tray is connected to the scanning device so that the scanning device can scan the negative or positive.

After the negative or positive is scanned to the digital image, the scanning device performs the image processing for the digital image from the negative and positive according to the different adjusting parameters. Currently, the user has to configure the adjusting parameters for the negative and positive manually, including gamma adjustment, exposure adjustment, and white balance adjustment. If the user configures the wrong scanning mode for the negative or positive, the scanning device cannot process the image properly resulting in abnormal color of the image.

This in mind, the present invention aims at providing a scanning device that automatically determines scanning parameters.

This is achieved by a scanning device according to claim 1. The dependent claims pertain to corresponding further developments and improvements.

As will be seen more clearly from the detailed description following below, the claimed scanning device includes a first identification element electrically connected to the detection module and the scanning module.

In the following, the invention is further illustrated by way of example, taking reference to the accompanying drawings. Thereof
FIG.1 is a block diagram of a scanning device according to the present invention,
FIG.2 is a schematic view of a first embodiment of a scanning device according to the present invention,
FIG.3 is a schematic view of the negative tray,
FIG.4 is a schematic view of the positive tray,
FIG. 5 is a schematic view of a second embodiment of a scanning device of the present invention, and
FIG.6 is a schematic view of a third embodiment of a scanning device of the present invention.

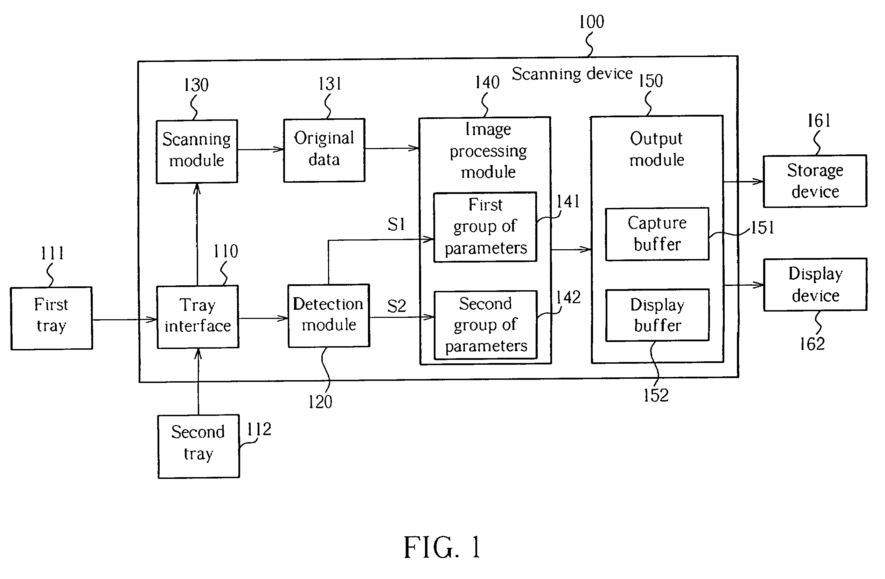

Please refer to FIG.1. FIG.1 is a block diagram of a scanning device according to the present invention. The scanning device 100 comprises a tray interface 110, a detection module 120, a scanning module 130, an image processing module 140, and an output module 150. The tray interface 110 is capable of connecting a first tray 111 and a second tray 112. Since the shapes of the negative and positive are different, the negative and positive have to be loaded on the different types of the trays so that the scanning device 100 can read them from the tray interface 110. The first-type object loaded on the first tray 111 is the negative and the second-type object loaded on the second tray 112 is the positive. The first tray 111 and the second tray 112 cannot exchange.

The scanning device 100 of the present invention can switch the image processing modes automatically according to the identification elements installed on the trays. When the negative is loaded on the first tray 111 and connected to the tray interface 110, the detection module 120 detects the first identification element so as to generate a first signal S1; meanwhile, the scanning module 130 scans the negative on the first tray 111 so as to generate original data 131. The image processing module 140 uses a first group of parameters 141 to process the original data 131 according to the first signal S1. The first group of parameters comprises the negative adjusting parameters for gamma adjustment, exposure adjustment, and white balance adjustment.

On the other hand, when the positive is loaded on the second tray 112 and connected to the tray interface 110, the detection module 120 does not detect the first identification element so as to generate a second signal S2; meanwhile, the scanning module 130 scans the positive on the first tray 112 so as to generate original data 131.

In another embodiment, the detection module 120 can detect a second identification element installed on the second tray 112 so as to generate the second signal S2. The image processing module 140 use a second group of parameters 142 to process the original data 131 according to the second signal S2. The second group of parameters comprises the positive adjusting parameters for gamma adjustment, exposure adjustment, and white balance adjustment. Then, the image processing module 140 temporarily stores the processed data in a capture buffer 151 and a display buffer 152 of the output module 150 for outputting to a storage device 161 and a display device 162.

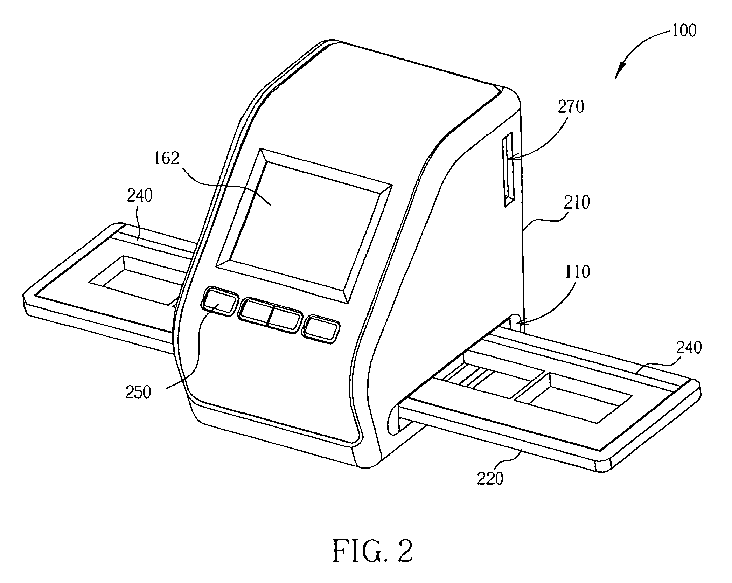

Please refer to FIG.2. FIG.2 is a schematic view of a first embodiment of a scanning device according to the present invention. The scanning device 100 comprises a housing 210, a tray 220, a tray interface 110, an identification element 240, a control panel 250, a display device 162, and a storage interface 270. The tray interface 110 is installed in the bottom of the housing 210, for connecting the tray 220. The tray 220 comprises two types. The first tray 111 is the negative tray, and the second tray 112 is the positive tray. In the prior art, the user needs to switch the image processing mode of the scanning device 100 through the control panel 250 and the display device 162 according to the type of the object to be scanned. The tray 220 of the present invention has the identification element 240, so the scanning device 100 can detect the identification element 240 to determine that the tray 220 is the negative tray or the positive tray and then switch the image processing mode accordingly.

In the embodiments of the present invention, the detection module 120 of the scanning device 100 can use a few ways to detect the identification 240 of the tray 220, including optical detection, magnetic detection, and electric detection. Each way has the corresponding identification element 240. However, no matter what kind of the way is used, the negative tray and the positive tray make the detection module 120 of the scanning device 100 generating different signals. Thus, the scanning device 100 can switch the image processing mode according to the different signals. When the scan is finished, the scanning device 100 can show the image on the display device 162 or store the image data in the storage device 161 through the storage interface 270.

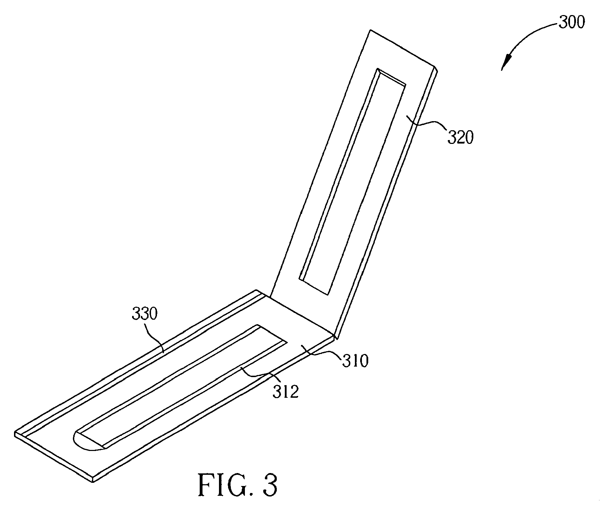

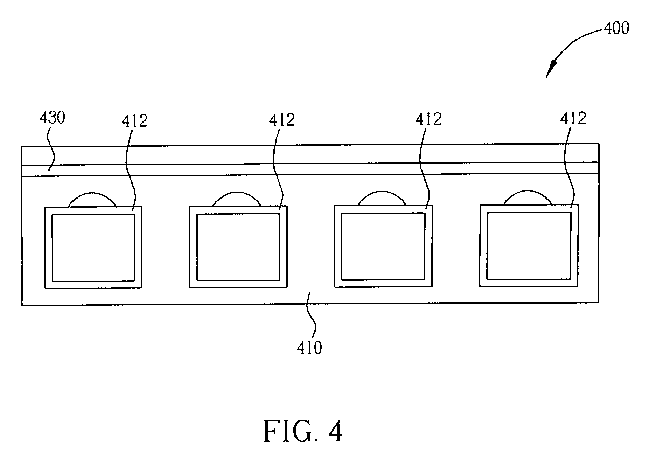

Please refer to FIG.3 and FIG.4. FIG.3 is a schematic view of the negative tray. FIG.4 is a schematic view of the positive tray. The negative tray comprises a carrier 310, a cover 320, and an identification element 330. The carrier 310 has a negative guide 312 for loading the negative. The cover 320 is used to fix the negative after the negative is loaded on the carrier 310.

The positive tray 400 comprises a carrier 410. The carrier 410 has a plurality of positive guides 412 and an identification element 430. Each positive guide 412 can load and fix one positive, so the carrier 410 can load a plurality of positives at the same time. The detection module 120 of the scanning device 100 can detect the identification element 330 of the negative tray 300 and the identification element 430 of the positive tray 400 by different ways, so the identification element 330 of the negative tray 300 and the identification element 430 of the positive tray 400 have corresponding embodiments for the detection module 120 of the scanning device 100 generating different signals.

For optical detection, the identification element 330 of the negative tray 300 is a light reflector bar, the identification element 430 of the positive tray 400 is a dark reflector bar, and the detection module 120 of the scanning device 100 comprises a photo sensor. The photo sensor generates different signals when detecting the light reflector bar and the dark reflector bar, so the scanning device 100 can switch the image processing mode accordingly.

For magnetic detection, the identification element 330 of the negative tray 300 is a magnetic bar, the identification element 430 of the positive tray 400 is a plastic bar, and the detection module 120 of the scanning device 100 comprises a magnetic sensor. The magnetic sensor generates different signals when detecting the magnetic bar and the plastic bar, so the scanning device 100 can switch the image processing mode accordingly.

For electric detection, utilizing the RFID technology, the identification element 330 of the negative tray 300 is a first RFID tag, the identification element 430 of the positive tray 400 is a second RFID tag, and the detection module 120 of the scanning device 100 comprises an RFID reader. The RFID reader generates different signals when detecting the first RFID tag and the second RFID tag, so the scanning device 100 can switch the image processing mode accordingly.

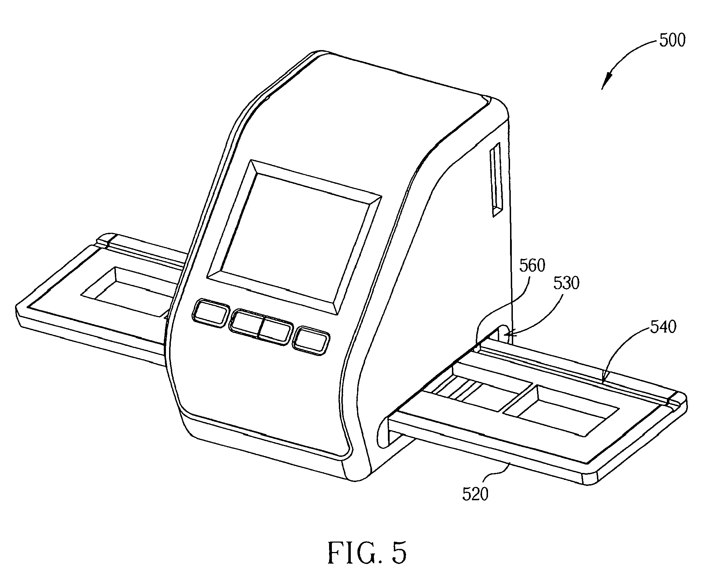

Please refer to FIG.5. FIG.5 is a schematic view of a second embodiment of a scanning device of the present invention. The scanning device 500 comprises a raised button switch 560 installed in the tray interface 530. The scanning device 500 uses the negative adjusting parameters to process the scanned image when the button switch 560 is not pushed. The scanning device 500 uses the positive adjusting parameters to process the scanned image when the button switch 560 is pushed. Thus, the identification element of the negative tray 520 is a groove 540 for containing the button switch 560. The button switch 560 enters the groove 540 when the negative tray is connected to the scanning device 500, so the button switch 560 is not pushed and the scanning device 500 uses the negative adjusting parameters to process the scanned image. On the other hand, the identification element of the positive tray is flat, so the button switch 560 is pushed when the positive tray is connected to the scanning device 500, and the scanning device 500 uses the positive adjusting parameters to process the scanned image.

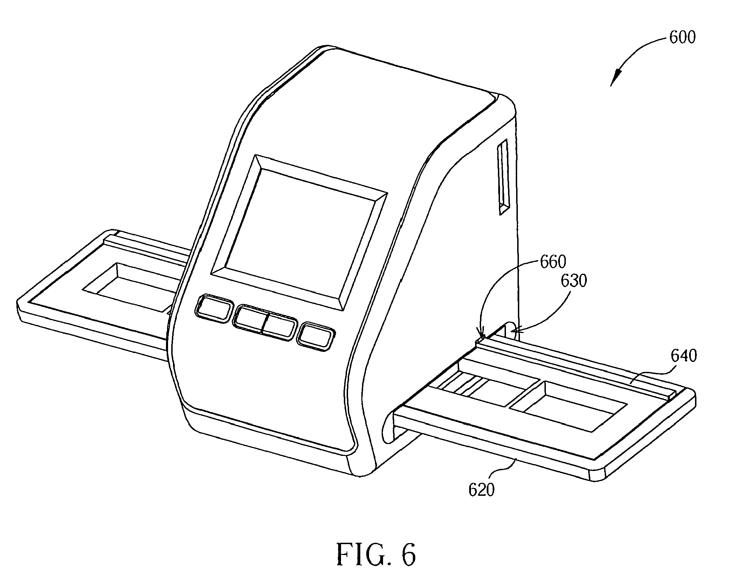

Please refer to FIG.6. FIG.6 is a schematic view of a third embodiment of a scanning device of the present invention. The scanning device 600 comprises a depressed button switch 660 installed in the tray interface 630. The scanning device 600 uses the negative adjusting parameters to process the scanned image when the button switch 660 is pushed. The scanning device 600 uses the positive adjusting parameters to process the scanned image when the button switch 660 is not pushed. Thus, the identification element of the negative tray 620 is a raised bar 640 for pressing the button switch 660. The raised bar 640 presses the button switch 660 when the negative tray is connected to the scanning device 600, so the scanning device 600 uses the negative adjusting parameters to process the scanned image. On the other hand, the identification element of the positive tray is flat, so the button switch 660 is not pushed and the scanning device 600 uses the positive adjusting parameters to process the scanned image.

In conclusion, the scanning device according to the present invention comprises a positive tray, a negative tray, a detection module, a scanning module, and an image processing module. One of the negative tray and the positive tray has an identification element, or both the negative tray and the positive tray have different identification elements. When the scanning device scans the negative tray, the detection module generates a first signal according to the identification element. When the scanning device scans the positive tray, the detection module generates a second signal according to the identification element. The image processing module uses negative adjusting parameters to process the scanned image when receiving the first signal. The image processing module uses positive adjusting parameters to process the scanned image when receiving the second signal. Thus, when the user uses the scanning device of the present invention, it is convenient that the user do not need to switch the image processing mode of the scanning device through the control panel according to the type of the object to be scanned.

## Claims

1. A scanning device (100, 500, 600), comprising:
a first tray (111, 220, 300, 520, 560, 620), for loading a first-type object;
**characterized by**:
a first identification element (240, 330, 540, 560, 640), installed on the first tray (111, 220, 300, 520, 620);
a second tray (112, 400), for loading a second-type object;
a detection module (120), for detecting the first identification element (240, 330, 540, 560, 640), the detection module (120) generating a first signal when detecting the first identification element (240, 330, 540, 560, 640), and generating a second signal when the first identification element (240, 330, 540, 560, 640) is undetected;
a scanning module (130), for scanning the first-type object and the second-type object so as to generate original data; and
an image processing module (140), electrically connected to the detection module (120) and the scanning module (130), for processing the original data, the image processing module (140) using a first group of parameters to process the original data when receiving the first signal and using a second group of parameters to process the original data when receiving the second signal.

2. The scanning device (100, 500, 600) of claim 1 further **characterized by** a second identification element (240, 430) installed on the second tray (112, 400), and the detection module (120) generating the second signal when detecting the second identification element (240, 430).

3. The scanning device (100, 500, 600) of claim 1 **characterized in that** the first identification element (240, 330, 540, 560, 640) is a reflector bar (640), and the detection module (120) comprises a photo sensor for detecting the reflector bar (640).

4. The scanning device (100, 500, 600) of claim 1 **characterized in that** the first identification element (240, 330, 540, 560, 640) is a magnetic bar (330), and the detection module (120) comprises a magnetic sensor for detecting the magnetic bar (330).

5. The scanning device (100, 500, 600) of claim 1 **characterized in that** the first identification element (240, 330, 540, 560, 640) is an RFID tag (330, 430), and the detection module (120) comprises an RFID reader for detecting the RFID tag (330, 430).

6. The scanning device (100, 500, 600) of claim 1 **characterized in that** the detection module (120) comprises a button switch (560, 660), and the first identification element (240, 330, 540, 560, 640) is a groove (540) for containing the button switch (560, 660) for generating the first signal.

7. The scanning device (100, 500, 600) of claim 1 **characterized in that** the detection module (120) comprises a button switch (560, 660), and the first identification element (240, 330, 540, 560, 640) is a raised bar (640) for pressing the button switch (560, 660) for generating the first signal.

8. The scanning device (100, 500, 600) of claim 1 **characterized in that** the first-type object is a negative, and the second-type object is a positive.

9. The scanning device (100, 500, 600) of claim 1 or 8 **characterized in that** the first group of parameters comprises the negative adjusting parameters for gamma adjustment, exposure adjustment, and white balance adjustment.

10. The scanning device (100, 500, 600) of claim 1 or 8 **characterized in that** the second group of parameters comprises the positive adjusting parameters for gamma adjustment, exposure adjustment, and white balance adjustment.

## Amended claims

### Amended claims in accordance with Rule 137(2) EPC.

**1.** A scanning device (100, 500, 600), comprising:
a first tray (111, 220, 300, 520, 560, 620) for loading a first-type object;
a first identification element (240, 330, 540, 560, 640), installed on the first tray (111, 220, 300, 520, 560, 620);
a second tray (112, 400), for loading a second-type object;
a detection module (120), the detection module (120) generating a first signal when detecting the first identification element (240, 330, 540, 560, 620), and generating a second signal when the first identification element (240, 330, 540, 560, 640) is undetected;
a scanning module (130), for scanning the first-type object and second-type object so as to generate original data; and
an image processing module (140), electrically connected to the detection module (120) and the scanning module (130), for processing the original data, the image processing module (140) using a first group of parameters to process the original data when receiving the first signal and using a second group of parameters to process the original data when receiving the second signal
**characterized in that**
the first-type object is a negative and the second-type object is a positive
the first group of parameters comprises the negative adjusting parameters for gamma adjustment, exposure adjustment and white balance adjustment, and
the second group of parameters comprises the positive adjusting parameters for gamma adjustment, exposure adjustment and white balance adjustment.

**2.** The scanning device (100, 500, 600) of claim 1 further **characterized by** a second identification element (240, 430) installed on the second tray (112, 400), and the detection module (120) generating the second signal when detecting the second identification element (240, 430).

**3.** The scanning device (100, 500, 600) of claim 1 **characterized in that** the first identification element (240, 330, 540, 560, 640) is a reflector bar (640), and the detection module (120) comprises a photo sensor for detecting the reflector bar (640).

**4.** The scanning device (100, 500, 600) of claim 1 **characterized in that** the first identification element (240, 330, 540, 560, 640) is a magnetic bar (330), and the detection module (120) comprises a magnetic sensor for detecting the magnetic bar (330).

**5.** The scanning device (100, 500, 600) of claim 1 **characterized in that** the first identification element (240, 330, 540, 560, 640) is an RFID tag (330, 430), and the detection module (120) comprises an RFID reader for detecting the RFID tag (330, 430).

**6.** The scanning device (100, 500, 600) of claim 1 **characterized in that** the detection module (120) comprises a button switch (560, 660), and the first identification element (240, 330, 540, 560, 640) is a groove (540) for containing the button switch (560, 660) for generating the first signal.

**7.** The scanning device (100, 500, 600) of claim 1 **characterized in that** the detection module (120) comprises a button switch (560, 660), and the first identification element (240, 330, 540, 560, 640) is a raised bar (640) for pressing the button switch (560, 660) for generating the first signal.
